# EUROPEAN PATENT APPLICATION

(11) **EP 2 447 035 A1**
(43) Date of publication of application: **02.05.2012**
(21) Application number: 11008714.5
(22) Date of filing: 31.10.2011
(51) Int. Cl.: B29C 45/76, G05B 19/414

(54) **Injection molding machine**

(30) Priority: 01.11.2010 JP 2010245604
(71) Applicant: Sumitomo Heavy Industries, LTD., Tokyo 141-6025 (JP)
(72) Inventor: Sato, Hiroshi, Chiba-shi Chiba 263-0001 (JP); Tsunemi, Kouki, Chiba-shi Chiba 263-0001 (JP); Abe, Yoshifuru, Chiba-shi Chiba 263-0001 (JP)
(74) Representative: Wagner, Karl H.

(57) **Abstract**

An injection molding machine according to an embodiment of the present invention mounts a multi-axis servo driver (EQ) which integrally controls four servo motors (M1-M4). The multi-axis servo driver (EQ) is provided with a CPU resource used for calculations related to each of the four servo motors (M1-M4). The multi-axis servo driver (EQ) is also provided with a control cycle setting part (C13) for individually setting each control cycle of the four servo motors (M1-M4). The control cycle setting part (C13) can set each control cycle of the four servo motors (M1-M4) so that a control cycle of at least one of the four servo motors (M1-M4) changes during a molding cycle.

## Description

### BACKGROUND OF THE INVENTION

### 1. Field of the Invention

The present invention relates to an injection molding machine provided with a multi-axis servo driver which integrally controls a plurality of servo motors.

### 2. Description of the Related Art

Conventionally, a multi-axis servo driver which controls a plurality of servo motors is known (see JP2006-262636A). This multi-axis servo driver performs position control and speed control of a plurality of servo motors through use of a single CPU. Specifically, the multi-axis servo driver causes each LSI mounted on the plurality of servo motors to perform electric current control for each of the servo motors at timing independent from the timing of the CPU.

This multi-axis servo driver decides a control cycle depending on the number of the servo motors connected thereto. The multi-axis servo driver can shorten the control cycle with decrease in the number of the connected servo motors so that the multi-axis servo driver can maximize control accuracy of a mechanical system to which the multi-axis servo drive is mounted.

However, the multi-axis servo driver described in JP2006-262636A decides a control cycle common to all of the plurality of servo motors based only on the number of the connected servo motors. Thus, the multi-axis servo driver can not integrally control the plurality of servo motors, each of which has different required control accuracy, in an efficient manner.

### SUMMARY OF THE INVENTION

In consideration of the above, the present invention is intended to provide an injection molding machine provided with a multi-axis servo driver which integrally controls a plurality of servo motors with different required control accuracy, in an efficient manner.

To meet the above objective, an injection molding machine according to an embodiment of the present invention includes a multi-axis servo driver configured to integrally control a plurality of servo motors, wherein the multi-axis servo driver is provided with a CPU resource used for calculations related to each of the plurality of servo motors.

According to the above, the present invention can provide an injection molding machine provided with a multi-axis servo driver which integrally controls a plurality of servo motors with different required control accuracy, in a more efficient manner.

### BRIEF DESCRIPTION OF THE DRAWINGS

FIG. 1 is a functional block diagram illustrating a configuration example of a multi-axis servo driver mounted on an injection molding machine according to an embodiment of the present invention.
FIG. 2 is a diagram illustrating a temporal change in each CPU usage of four one-axis servo drivers.
FIG. 3 is a first diagram illustrating a temporal change in CPU usage of a multi-axis servo driver according to an embodiment of the present invention.
FIG. 4 is a second diagram illustrating a temporal change in CPU usage in a multi-axis servo driver according to an embodiment of the present invention.
FIG. 5 is a first diagram illustrating a method for adjusting CPU usage.
FIG. 6 is a second diagram illustrating a method for adjusting CPU usage.
FIG. 7 is a third diagram illustrating a method for adjusting CPU usage.
FIG. 8 is a fourth diagram illustrating a method for adjusting CPU usage.
FIG. 9 is a fifth diagram illustrating a method for adjusting CPU usage.
FIG. 10 is a sixth diagram illustrating a method for adjusting CPU usage.

### DETAILED DESCRIPTION OF THE PREFERRED EMBODIMENT

With reference to the figures, embodiments of the present invention are described in the following.

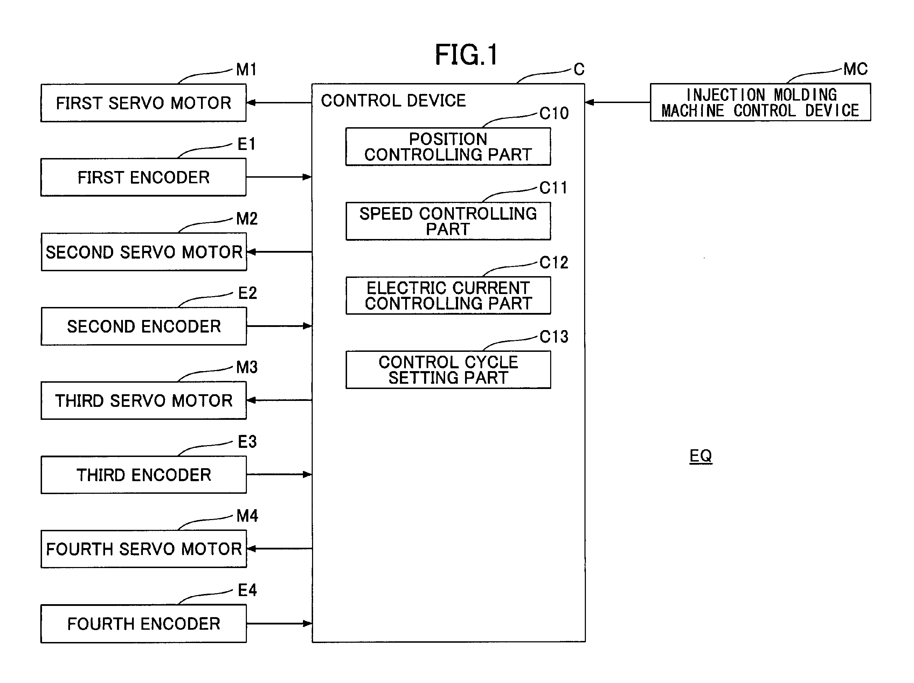

FIG. 1 is a functional block diagram illustrating a configuration example of a multi-axis servo driver EQ mounted on an injection molding machine according to an embodiment of the present invention. The multi-axis servo driver EQ mainly includes a control device C, servo motors M1-M4, encoders E1-E4, and an injection molding machine control device MC.

The control device C is a computer having a CPU (Central Processing Unit), a volatile storage medium (e.g., a RAM (Random Access Memory)), a nonvolatile storage medium (e.g., a ROM (Read Only Memory), an EEPROM (Electrically Erasable Programmable ROM), a flash memory, or the like), or the like. For example, the control device C reads out respective programs corresponding to each of functional elements such as a position controlling part C10, a speed controlling part C11, an electric current controlling part C12, and a control cycle setting part C13 from the nonvolatile storage medium, loads the respective programs into the volatile storage medium, and then causes the CPU to execute respective processes corresponding to the respective functional elements.

The servo motors M1-M4 are configured to drive a variety of movable parts mounted on the injection molding machine. For example, the first servo motor M1, the second servo motor M2, the third servo motor M3, and the fourth servo motor M4 correspond to an injection motor, a meter motor, a clamp motor, and an ejector motor, respectively. The control device C outputs a PWM (Pulse Width Modulation) command to each of the servo motors M1-M4. Each of the servo motors M1-M4 rotates in response to the PWM command .

Each of the encoders E1-E4 outputs each rotational angle (a rotational position) of the servo motors M1-M4 to the control device C.

The multi-axis servo driver EQ may be configured to integrally control two, three, or more than four servo motors.

The injection molding machine control device MC is configured to control the injection molding machine. The device MC can be a computer having a CPU, a volatile storage medium, a nonvolatile storage medium, or the like. For example, the device MC provides a variety of information such as a position command value, a control cycle, or the like to the control device C of the multi-axis servo driver EQ, so that the control device C can operate the injection motor, the meter motor, the clamp motor, the ejector motor, or the like at a desired timing.

Next, a variety of the functional elements in the control device C will be described.

The position controlling part C10 is configured to control respective rotational positions of the servo motors M1-M4 so that the respective rotational positions of the servo motors M1-M4 reach respective desired rotational positions. For example, the position controlling part C10 calculates respective speed command values corresponding to each of the servo motors M1-M4. Each of the speed command values is calculated so as to cancel a difference between each of position command values corresponding to each of the servo motors M1-M4 received from the injection molding machine control device MC and each of rotational position values received from each of the encoders E1-E4. Then, the position controlling part C10 outputs the respective calculated speed command values to the speed controlling part C11.

The speed controlling part C11 is configured to control respective rotational speeds of the servo motors M1-M4 so that the respective rotational speeds of the servo motors M1-M4 reach respective desired rotational speeds. For example, the speed controlling part C11 calculates respective torque command values corresponding to each of the servo motors M1-M4. Each of the torque command values is calculated so as to cancel a difference between each of speed command values corresponding to each of the servo motors M1-M4 received from the position controlling part C10 and each of rotational speed values calculated based on each of rotational angle values received from each of the encoders E1-E4. Then, the speed controlling part C11 outputs the respective calculated torque command values to the electric current controlling part C12.

The electric current controlling part C12 is configured to control respective electric current values supplied to each of the servo motors M1-M4 so that the respective electric current values supplied to each of the servo motors M1-M4 reach respective desired electric current values. For example, the electric current controlling part C12 calculates respective electric current values to be supplied to each of the servo motors M1-M4. Each of the electric current values is calculated so as to cancel a difference between each of torque command values corresponding to each of the servo motors M1-M4 received from the speed controlling part C11 and each of electric current values received from an electric current detector (not shown) which detects each of electric current values supplied to each of the servo motors M1-M4. Then, the electric current controlling part C12 supplies the respective calculated electric current values to each of the servo motors M1-M4.

The control cycle setting part C13 is configured to separately set frequency of calculation (control cycle) related to at least one of the servo motors M1-M4. For example, the control cycle setting part C13 individually sets each control cycle of the servo motors M1-M4 by receiving a value entered to the injection molding machine control device MC through an input device (not shown) attached to the injection molding machine, or a value previously stored in the injection molding machine control device MC.

For example, the control cycle setting part C13 improves control accuracy of a specific servo motor by shortening a control cycle related to the specific servo motor and then updating an electric current value to be supplied to the specific servo motor at shorter intervals.

Alternatively, the control cycle setting part C13 reduces unnecessary processes related to the specific servo motor (processes with accuracy higher than necessary) by extending a control cycle related to the specific servo motor and then updating an electric current value to be supplied to the specific servo motor at longer intervals.

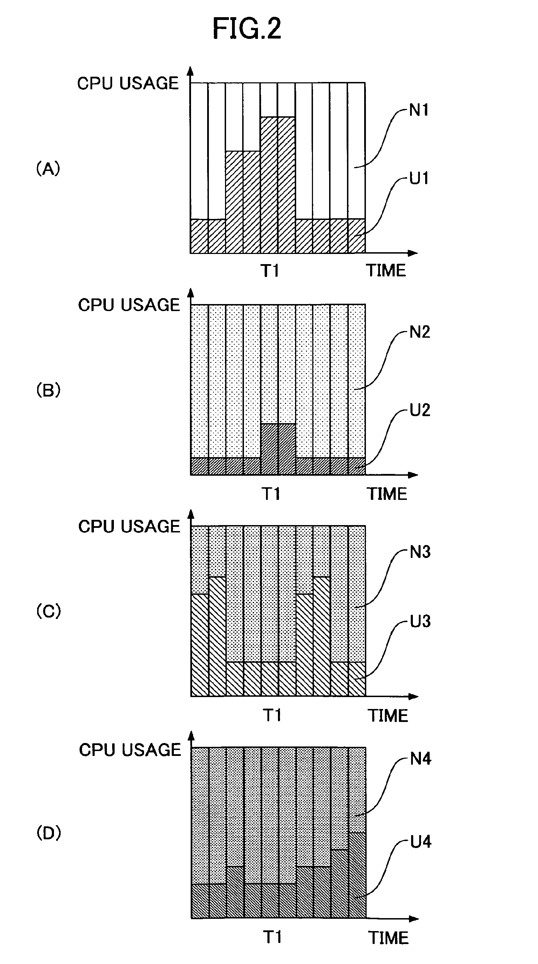

Next, referring to FIGS. 2-4, changes in CPU usage in a servo driver will be described.

FIG. 2 illustrates temporal changes of CPU usage in a molding cycle. The CPU usage is required for calculations to operate each of four servo motors in a molding cycle in each of four one-axis servo drivers.

FIG. 2(A) illustrates temporal change in CPU usage related to an injection motor. FIG. 2(B) illustrates temporal change in CPU usage related to a meter motor. FIG. 2(C) illustrates temporal change in CPU usage related to a clamp motor. FIG. 2(D) illustrates temporal change in CPU usage related to an ejector motor.

All of FIGS. 2(A)-2(D) each have a vertical axis indicating CPU usage and a horizontal axis as a temporal axis. Each of diagonal hatched areas U1-U4 represents CPU usage per unit time related to each of the four servo motors. A white area N1 and each of dot hatched areas N2-N4 represent remaining CPU usage (an amount calculated by subtracting CPU usage from CPU capacity which is a maximum computing capacity per unit time) related to each of the four servo motors.

Each of FIGS. 2(A)-2(D) shows that CPU resources (CPU capacities) of equal size are individually allocated for respective calculations related to each of the four servo motors, unlike in the case of the multi-axis servo driver EQ according to an embodiment of the present invention. Each of these four servo drivers are supposed to be not able to use remaining CPU usage in CPU resource (CPU capacity) allocated to one servo motor for another servo motor.

The case where CPU resources (CPU capacities) of equal size are individually allocated for respective calculations related to each of the four servo motors corresponds, for example, to the case where CPUs of equal performance are applied to each of the four servo motors. The CPUs are provided with sufficient CPU resources (CPU capacities) for smoothly operating an injection motor whose CPU usage is the largest in the four servo motors. As a result, the other three servo motors are provided with excessive CPU resources (CPU capacities).

In this case, as shown in FIG. 2(A) and 2(B), at time T1, if CPU usage related to the injection motor gets close to its CPU capacity, even if remaining CPU usage related to the meter motor is sufficient, the CPU can not execute calculations related to the injection motor by using the remaining CPU usage related to the meter motor.

In some cases, the CPU has to reduce frequency of calculation related to the injection motor while leaving sufficient remaining CPU usage related to the meter motor so that the CPU usage related to the injection motor does not exceed the CPU capacity. The remaining CPU usage related to the meter motor becomes useless resource which is not used for calculations related to other servo motors, unless it is used for calculations related to the meter motor.

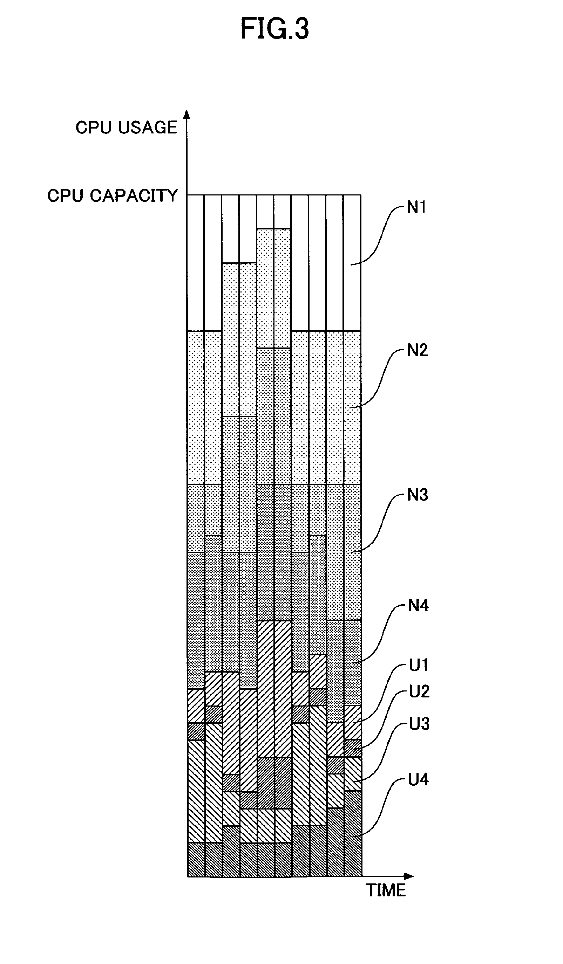

In contrast to this, FIG. 3 illustrates temporal changes in CPU usage in the multi-axis servo driver EQ according to an embodiment of the present invention which is able to use remaining CPU usage in CPU resource (CPU capacity) allocated to one servo motor for other servo motors.

As in FIG.2, FIG. 3 has a vertical axis indicating CPU usage and a horizontal axis as a temporal axis. Each of diagonal hatched areas U1-U4 represents CPU usage per unit time related to each of four servo motors as in FIGS. 2(A)-2(D). A white area N1 and each of dot hatched areas N2-N4 represent remaining CPU usage related to each of the four servo motors as in FIGS. 2(A)-2(D).

In the multi-axis servo driver EQ, for example, if a single CPU shared by each of the four servo motors is employed, one CPU resource (CPU capacity) can be used for respective calculations related to each of the four servo motors. The remaining CPU usage indicated by each of areas N1-N4 can be used for calculations related to any of the four servo motors.

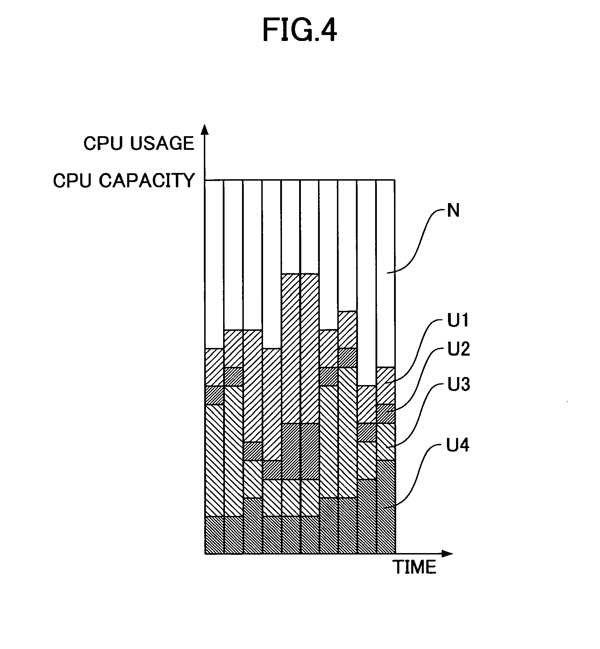

Moreover, FIG. 4 illustrates the case where CPU resource (CPU capacity) is reduced for reducing relatively large remaining CPU usage (sum of the areas N1-N4, eventually becoming excessive CPU resource) in FIG. 3.

As in FIGS. 2 and 3, FIG. 4 has a vertical axis indicating CPU usage and a horizontal axis as a temporal axis. Each of diagonal hatched areas U1-U4 represents CPU usage per unit time related to each of four servo motors as in FIGS. 2(A)-2(D). A white area N represents remaining CPU usage.

FIG. 4 shows that each CPU usage per unit time related to each of the four servo motors are the same as those in FIG. 3. FIG. 4 also shows that remaining CPU usage is substantially reduced in comparison to the sum of areas N1-N4 and thus CPU resource (CPU capacity) more suitable for actual CPU usage is selected.

In this way, the multi-axis servo driver EQ allows one CPU resource (CPU capacity) to be used for respective calculations related to each of the four servo motors, and allows the remaining CPU usage to be used for calculations related to any of the four servo motors. Thus, the multi-axis servo driver EQ can use the CPU resource (CPU capacity) more efficiently, compared with the configuration of a plurality of one-axis servo drivers where one CPU resource (CPU capacity) is allocated to each of four servo motors, and remaining CPU usage in the CPU resource (CPU capacity) allocated for one servo motor can not be used for other servo motors.

As described above, the multi-axis servo driver EQ can use the CPU resource (CPU capacity) more efficiently. Thus, the multi-axis servo driver EQ allows the CPU resource (CPU capacity) to have just enough specs suitable for actual CPU usage, and allows the CPU resource (CPU capacity) to be more adequate in comparison to the case where a plurality of one-axis servo drivers are used.

As described above, the multi-axis servo driver EQ can use the CPU resource (CPU capacity) more efficiently. Thus, the multi-axis servo driver EQ allows the number of drive axes as controlled objects to increase without increasing necessary CPU resource (CPU capacity) in comparison to the case where a plurality of one-axis servo drivers are used. Alternatively, the multi-axis servo driver EQ allows software executed in parallel simultaneously which uses the CPU resource to be added without increasing necessary CPU resource (CPU capacity) in comparison to the case where a plurality of one-axis servo drivers are used.

The multi-axis servo driver EQ can reduce a time lag which arises during data passing among each of the four servo motors in comparison to the case where a plurality of one-axis servo drivers are used. Then, the multi-axis servo driver EQ can control each of the four servo motors more accurately, i.e., at a shorter control cycle.

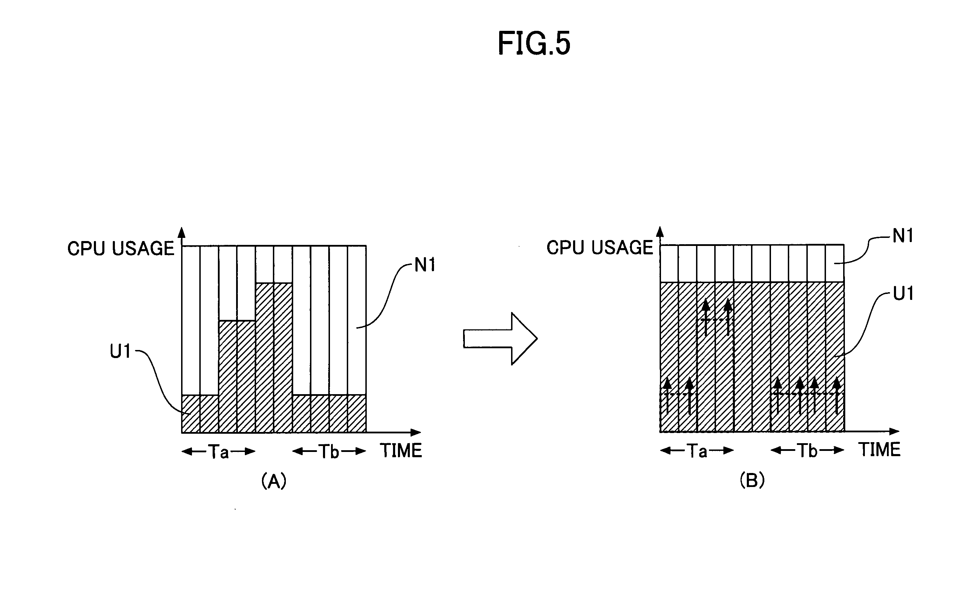

Next, referring to FIGS. 5-10, an example of a method for setting each control cycle of the servo motors M1-M4 controlled by the multi-axis servo driver EQ will be described.

As in FIGS. 2-4, FIGS. 5-10 each have a vertical axis indicating CPU usage and a horizontal axis as a temporal axis. FIGS. 5-10 each illustrate temporal changes in CPU usage related to the servo motors. Each of diagonal hatched areas U1-U4 represents CPU usage per unit time related to each of the four servo motors M1-M4. A white area N1 and each of dot hatched areas N2-N4 represent remaining CPU usage related to each of the four servo motors M1-M4.

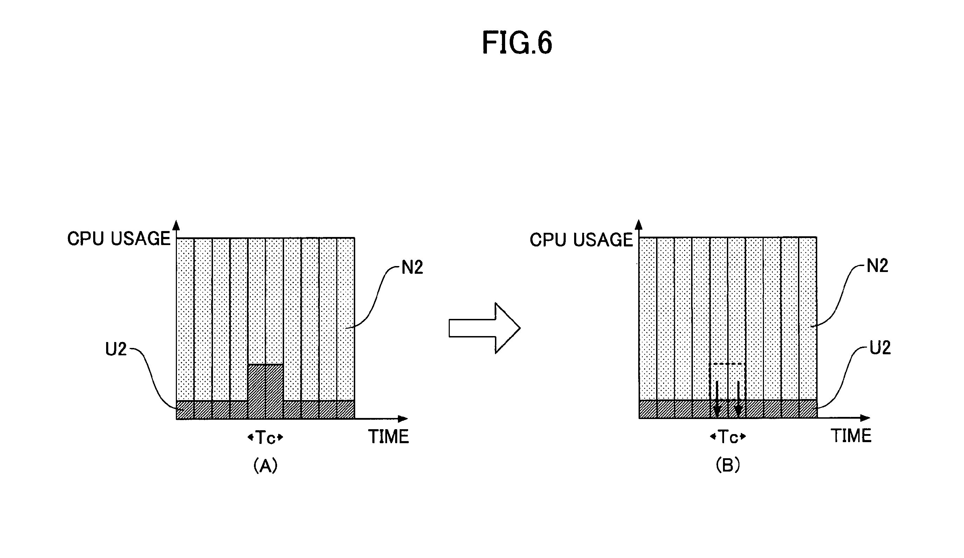

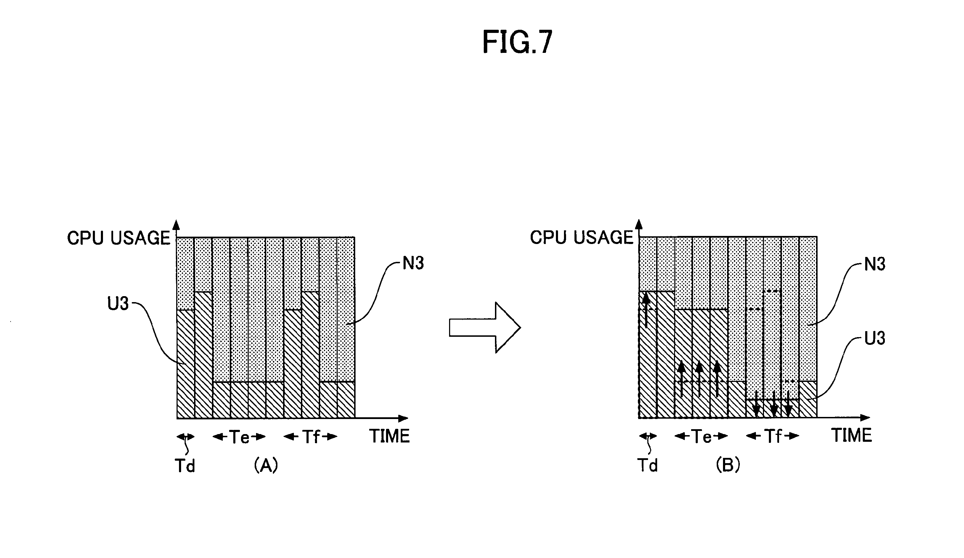

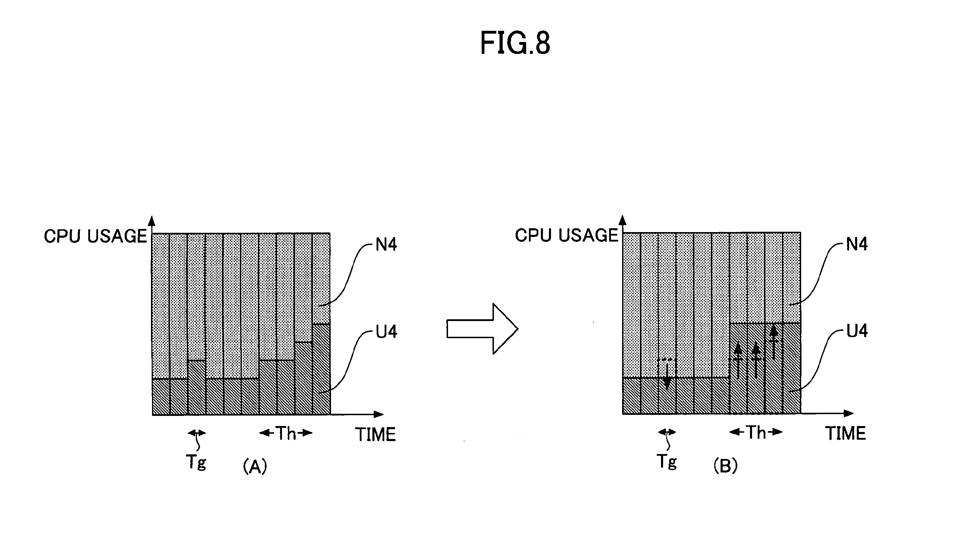

On that basis, FIG. 5 illustrates a method for adjusting CPU usage related to the injection motor M1, and FIG. 6 illustrates a method for adjusting CPU usage related to the meter motor M2. Similarly, FIG. 7 illustrates a method for adjusting CPU usage related to the clamp motor M3, and FIG. 8 illustrates a method for adjusting CPU usage related to the ejector motor M4.

As shown in FIG. 5, the multi-axis servo driver EQ changes frequency of calculation (a control cycle) related to the injection motor M1 based on a setting by the control cycle setting part C13 with progression of a molding cycle, and shortens each control cycle in time periods Ta, Tb, each CPU usage of which has been relatively low so far. Thus, the multi-axis servo driver EQ may equalize CPU usage related to the injection motor M1 over the whole molding cycle.

In this way, the multi-axis servo driver EQ is able to improve control accuracy of the injection motor M1 in the time periods Ta, Tb, each control cycle of which is shortened, compared with before the shortening of the control cycle.

Also, as shown in FIG. 6, the multi-axis servo driver EQ changes frequency of calculation (a control cycle) related to the meter motor M2 based on a setting by the control cycle setting part C13 with progression of a molding cycle, and extends the control cycle in time period Tc whose CPU usage has been relatively high so far. Thus, the multi-axis servo driver EQ may equalize CPU usage related to the meter motor M2 over the whole molding cycle.

In this way, the multi-axis servo driver EQ is able to increase remaining CPU usage in the time period Tc whose control cycle has been extended, compared with before the extension. Meanwhile, the multi-axis servo driver EQ is supposed to be able to drive the meter motor M2 at a just enough accuracy, even with the extended control cycle.

Also, as shown in FIG. 7, the multi-axis servo driver EQ changes frequency of calculation (a control cycle) related to the clamp motor M3 based on a setting by the control cycle setting part C13 with progression of a molding cycle, shortens each control cycle in time periods Td, Te as a part of the molding cycle, and extends the control cycle in a time period Tf as another part of the molding cycle. Thus, the multi-axis servo driver EQ may ensure a just enough remaining CPU usage to ensure CPU resource required by the motor M1, M2, or M4, while driving the clamp motor M3 at a just enough accuracy.

Moreover, as shown in FIG. 8, the multi-axis servo driver EQ changes frequency of calculation (a control cycle) related to the ejector motor M4 based on a setting by the control cycle setting part C13 with progression of a molding cycle, extends a control cycle in a time period Tg as a part of the molding cycle, and shortens a control cycle in a time period Th as another part of the molding cycle. Thus, the multi-axis servo driver EQ may ensure a just enough remaining CPU usage to ensure CPU resource required by the motor M1, M2, or M3, while driving the ejector motor M4 at a just enough accuracy.

Other than the above described adjustments, the multi-axis servo driver EQ is able to arbitrarily shorten or extend each control cycle related to each of the servo motors M1-M4, based on the setting by the control cycle setting part C13.

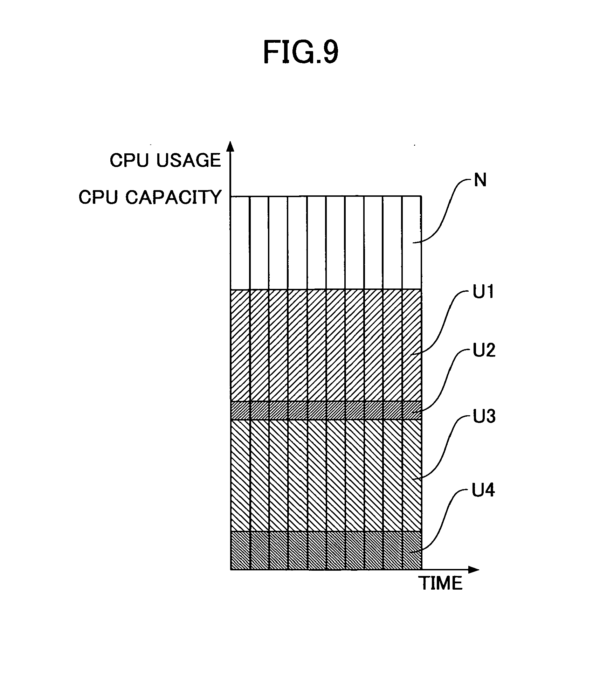

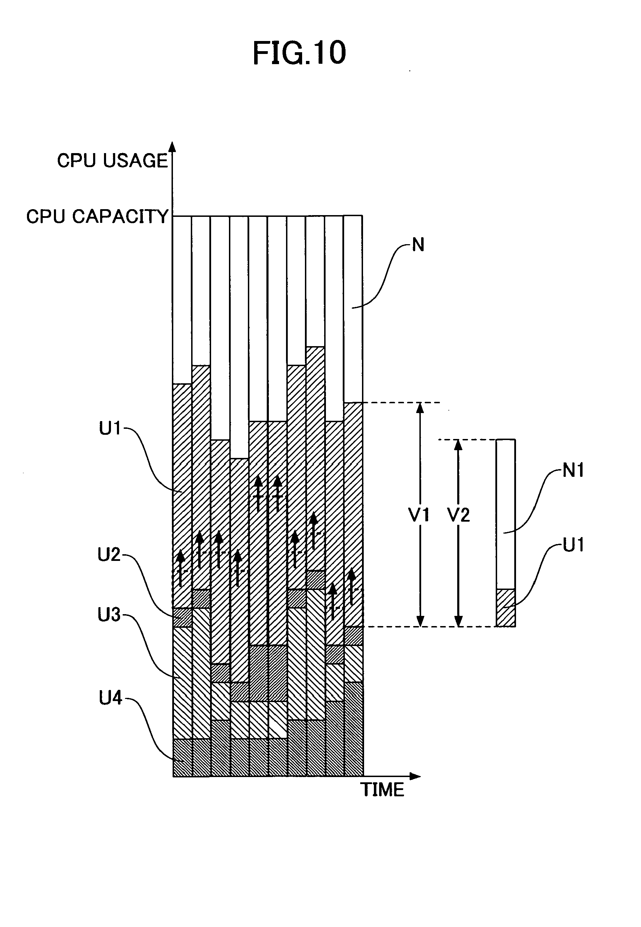

FIGS. 9 and 10 each show temporal changes of CPU usage of the entire multi-axis servo driver EQ eventually obtained by the adjustments of each CPU usage of the servo motors M1-M4 illustrated in FIGS. 5-8.

FIG. 9 also shows the case where each control cycle related to each of the servo motors M1-M4 has been set individually and temporally variably so that each CPU usage of the servo motors M1-M4 becomes constant independently of a lapse of time. FIG. 10 also shows the case where the control cycle related to the injection motor M1 has been shortened in order to improve the control accuracy of the injection motor M1.

As shown in FIG. 10, a degree of shortening of the control cycle related to the injection motor M1 varies with time. CPU usage V1 related to the injection motor M1 after the shortening is adjusted to be constant independently of a lapse of time. The CPU usage V1 can be adjusted to be larger than CPU resource (CPU capacity) V2 allocated for calculations related to an injection motor in the case where a plurality of one-axis servo driver is used. The CPU resource V2 corresponds to a sum of the CPU usage U1 in FIG. 2(A) and the remaining CPU usage N1 in FIG. 2(A).

In this way, the multi-axis servo driver EQ can adjust each CPU usage related to each of the servo motors M1-M4 more flexibly, and increase or decrease respective control accuracy of the servo motors M1-M4 as needed.

With the above described configuration, the multi-axis servo driver EQ can integrally control a plurality of servo motors each required control accuracy of which differs, in a more efficient manner.

Also, the multi-axis servo driver EQ can reduce unnecessary CPU resource without affecting respective control accuracy of the plurality of servo motors.

Also, the multi-axis servo driver EQ can improve control accuracy of a specific servo motor without increasing required CPU resource (CPU capacity).

Also, the multi-axis servo driver EQ can moderate requirements in a power supply design or a board design and expand design possibility by reducing the required CPU resource (CPU capacity).

Also, the multi-axis servo driver can achieve energy saving by reducing the required CPU resource (CPU capacity).

Although details of the preferred embodiments have been described, the present invention is not intended to be limited to the above described embodiments. It is possible to apply a variety of modifications or substitutions to the above described embodiments without departing from the scope of the present invention.

For example, in the above described embodiments, the control cycle setting part C13 sets each control cycle of the servo motors M1-M4 individually and temporally variably. However, the control cycle setting part C13 may only set a control cycle of one of the servo motors M1-M4 or each control cycle of two or three of the servo motors M1-M4, independently of each control cycle of other servo motor(s).

## Claims

1. An injection molding machine comprising:
a multi-axis servo driver configured to integrally control a plurality of servo motors,
wherein the multi-axis servo driver is provided with a CPU resource used for calculations related to each of the plurality of servo motors.

2. The injection molding machine as claimed in claim 1, further comprising:
a control cycle setting part configured to independently set a control cycle of at least one of the plurality of servo motors.

3. The injection molding machine as claimed in claim 2,
wherein the control cycle setting part individually sets each control cycle of the plurality of servo motors.

4. The injection molding machine as claimed in claim 2 or 3,
wherein the control cycle setting part sets the control cycle of at least one of the plurality of servo motors so that the control cycle of at least one of the plurality of servo motors changes during a molding cycle.
